# EUROPÄISCHE PATENTSCHRIFT

(11) **EP 4 065 860 B1**
(45) Veröffentlichungstag und Bekanntmachung des Hinweises auf die Patenterteilung: **22.05.2024**
(21) Anmeldenummer: 20807652.1
(22) Anmeldetag: 02.11.2020
(51) Int. Cl.: F16H 7/12, B28B 1/00, B33Y 10/00, F16H 55/36, F16H 55/48

(54) **BANDSPANNROLLE FÜR EINEN ZUGMITTELTRIEB SOWIE VERFAHREN ZUR HERSTELLUNG EINER BANDSPANNROLLE**
BELT TENSIONING ROLLER FOR A TRACTION MECHANISM, AND METHOD FOR PRODUCING A BELT TENSIONING ROLLER
ROULEAU TENDEUR DE COURROIE POUR MÉCANISME DE TRACTION ET PROCÉDÉ DE FABRICATION DE ROULEAU TENDEUR DE COURROIE

(30) Priorität: 26.11.2019 DE 102019131896; 28.11.2019 DE 102019132263
(43) Veröffentlichungstag der Anmeldung: 05.10.2022
(73) Patentinhaber: Schaeffler Technologies AG & Co. KG, 91074 Herzogenaurach (DE)
(72) Erfinder: GERHARD, Daniel, 90425 Nürnberg (DE); BARTELS, Dominic, 91052 Erlangen (DE)
(86) Internationale Anmeldenummer: PCT/DE2020/100930
(87) Internationale Veröffentlichungsnummer: WO 2021/104563

(56) Entgegenhaltungen:
- EP-A1- 3 530 400
- WO-A-2008/110241
- DE-A1-102011 003 020
- DE-A1-102015 108 646
- US-A1- 2015 337 423

## Beschreibung

Die Erfindung betrifft eine Bandspannrolle für einen Zugmitteltrieb sowie ein Verfahren zur Herstellung einer solchen Bandspannrolle. Bandspannrollen führen und spannen Antriebsriemen beispielsweise in Textilmaschinen, Spinnmaschinen und Zwirnmaschinen.

Beispielsweise geht aus der DE 10 2006 039 363 A1 eine Bandspannrolle für einen Zugmitteltrieb hervor, die eine aus Kunststoff hergestellte und eine Lagerung außenseitig umschließende Laufrolle umfasst. Über eine Verschraubung ist die Lagerung lösbar an einem Maschinenteil befestigt. Eine Mantelfläche bildende Lauffläche der Bandspannrolle weist eine PVD-Beschichtung auf.

Die WO 2008 / 110 241 A beschreibt eine Aufzugsanlage mit einer Treibscheibe oder Umlenkrolle, deren mit einem Tragmittel zusammenwirkende Umfangsflächen eine Oberflächenbeschichtung aufweisen. Bei mittels PVD-Verfahren erzeugten Beschichtungen können Nanopartikel in die Beschichtung enthalten sein.

Die DE 10 2011 003 020 A1 offenbart eine Spann- und/oder Umlenkrolle aus Kunststoff mit einer nanokristallinen Beschichtung.

Die DE 10 2015 108 646 A1 beschreibt ein additives Fertigungsverfahren unter Verwendung eines keramischen Schlickers.

Die Aufgabe der vorliegenden Erfindung besteht darin, eine Bandspannrolle für einen Zugmitteltrieb sowie ein Verfahren zur Herstellung einer solchen Bandspannrolle weiterzuentwickeln. Insbesondere soll die Verschleißfestigkeit der Bandspannrolle erhöht werden.

Die Aufgabe wird gelöst durch den Gegenstand der Patentansprüche 1 und 9.

Bevorzugte Ausführungsformen sind den abhängigen Ansprüchen zu entnehmen.

Eine erfindungsgemäße Bandspannrolle für einen Zugmitteltrieb umfasst ein Ringelement mit einer Außenumfangsfläche, die zur Aufnahme eines Riemens eingerichtet ist, und einer Innenumfangsfläche, die zur Aufnahme eines Lagers eingerichtet ist, wobei zumindest ein Teil des Ringelements additiv hergestellt ist, wobei der additiv hergestellte Teil des Ringelements Nanopartikel aufweist, wobei die Nanopartikel inhomogen in dem additiv hergestellten Teil des Ringelements verteilt sind und das Ringelement mindestens zwei umlaufend ausgebildete Kammern aufweist.

Mit anderen Worten wird das Ringelement derart durch ein additives Fertigungsverfahren nachbearbeitet bzw. ergänzt, dass zumindest an einem Teil des Ringelements, durch Ablagern von Material, umfassend Nanopartikel, ein Aufbau entsteht. Ebenso kann das Ringelement vollständig durch ein additives Fertigungsverfahren hergestellt werden, bei dem durch Ablagern von Material mit Nanopartikel der Aufbau entsteht.

Unter einer additiven Fertigung eines Teils des Ringelements ist zu verstehen, dass zumindest ein Abschnitt des Ringelements, insbesondere ein Teil der Oberfläche des Ringelements in einem additiven Verfahren, also einem schichtweisen Aufbau des Bauteils hergestellt ist. Dieser additiv hergestellte Teil des Ringelements kann annähernd oder exakt dem darunter befindlichem Substrat, also der Grenzfläche am Ringelement folgen oder eine andere Form aufweisen. Mithin decken die durch additive Fertigung aufgebrachten Nanopartikel im Gegensatz zu Beschichtungsverfahren nicht nur die Oberfläche ab, sondern können auch einer komplexen dreidimensionalen Geometrie folgen. Durch den Einsatz der additiven Fertigung können Nanopartikel in Bereiche am Ringelement eingebracht werden, die für konventionelle Herstellungsverfahren schwer oder nach aktuellem Stand der Technik nicht zugänglich sind.

Nanopartikel sind Teilchen bzw. Partikel, die eine Kantenlänge oder einen Durchmesser von 1 Nanometer bis 1000 Nanometer aufweisen. Die Nanopartikel sind dazu eingerichtet, die Verschleißbeständigkeit und/oder die Härte des Ringelements zu erhöhen. Somit entsteht ein Ringelement, insbesondere eine Bandspannrolle, die lokal eine erhöhte Verschleißbeständigkeit aufweist, wobei an anderen Stellen unter Umständen völlig andere Eigenschaften erzielbar sind, beispielsweise eine hohe Duktilität. Insbesondere ist das Ringelement aus einem Grundmaterial ausgebildet, wobei in Bereichen, die aufgrund der Anforderungen eine höhere Verschleißbeständigkeit benötigen, lokal Nanopartikel durch additive Fertigung eingebracht werden, sodass dort die Verschleißbeständigkeit erhöht wird. Gegenüber Beschichtungsverfahren können somit auch nur gezielt an notwendigen Flächen andere Eigenschaften erzeugt werden.

Erfindungsgemäß sind die Nanopartikel inhomogen in dem additiv hergestellten Teil des Ringelements verteilt. Unter einer inhomogenen Verteilung der Nanopartikel in dem additiv hergestellten Teil des Ringelements ist eine ungleichmäßige Verteilung der Nanopartikel zu verstehen. Beispielsweise ist der Anteil der Nanopartikel an einem dem Ringelement zugewandten Abschnitt des additiv hergestellten Teils des Ringelements geringer als der Anteil der Nanopartikel an einem dem Ringelement abgewandten Abschnitt des additiv hergestellten Teils des Ringelements. Mit anderen Worten kann die Konzentration der Nanopartikel im additiv hergestellten Teil des Ringelements sich von Schicht zu Schicht unterscheiden, wobei sie bevorzugt mit jeder Schicht zunimmt. Durch eine zunehmende Konzentration von Nanopartikel ergibt sich der Vorteil, dass keine harten Übergänge zwischen unterschiedlichen Materialeigenschaften erzielt werden. Insbesondere kann dadurch ein Kompromiss zwischen hoher Verschleißfestigkeit an der Oberfläche bei ausreichender Duktilität im Bauteilinneren erzielt werden.

Gemäß einer bevorzugten Ausführungsform der Erfindung ist der additiv hergestellte Teil des Ringelements aus dem gleichen Werkstoff wie das Ringelement ausgebildet. Alternativ ist der additiv hergestellte Teil des Ringelements aus einem anderen Werkstoff wie das Ringelement ausgebildet. Insbesondere ist das Ringelement aus einer Leichtmetalllegierung, beispielsweise einer Aluminiumlegierung ausgebildet. Aluminium ist im Gegensatz zu Stahl relativ weich und weniger verschleißbeständig. Jedoch hat Aluminium eine geringere Dichte als Stahl, sodass ein Ringelement aus Aluminium bei gleichen Abmaßen ein geringeres Gewicht aufweist. Durch Ausbildung des Ringelements aus Aluminium und additiver Herstellung eines Teils des Ringelements, das einer stärkeren Oberflächenbeanspruchung ausgesetzt ist, können die Vorteile einer geringen Masse und erhöhten Verschleißbeständigkeit kombiniert werden.

Insbesondere weisen die Nanopartikel einen keramischen Anteil auf. Beispielsweise weisen die Nanopartikel einen kohlenstoffbasierten Anteil auf. Insbesondere sind die Nanopartikel als Karbidteilchen ausgebildet. Gemäß einer bevorzugten Ausführungsform sind die Nanopartikel als Keramikteilchen ausgebildet. Insbesondere weisen die Nanopartikel eine Kantenlänge bzw. einen Durchmesser von 10 Nanometer bis 500 Nanometer auf. Durch Zugabe höherschmelzender Nanopartikel, beispielsweise auf Karbidbasis, kann eine Erhöhung der Härte und der damit verbundenen Verschleißbeständigkeit durch Dispersionshärtung und Kornverfeinerung erzielt werden.

Bevorzugt ist der additiv hergestellte Teil des Ringelements zumindest teilweise mittels eines pulverbasierten additiven Fertigungsverfahrens, insbesondere Laserstrahlschmelzen im Pulverbett, Laserpulverauftragsschweißen oder 3D-Drucken (Binder Jetting), hergestellt. Bei dem Laserstrahlschmelzen im Pulverbett und Laserpulverauftragsschweißen wird ein Pulver an der Oberfläche des Ringelements, die später eine Grenzfläche zwischen dem Ringelement und dem additiv hergestellten Teil des Ringelements bildet, aufgebracht, aufgeschmolzen und stoffschlüssig verbunden. Beim 3D-Drucken wird ein pulverförmiges Ausgangsmaterial an ausgewählten Stellen mit einem Binder verklebt, um zumindest einen Teil des Ringelements zu erzeugen. Schicht für Schicht wird das Ringelement erweitert, wobei gezielte Formen ausgebildet und Nanopartikel im Gefüge eingebracht werden. Insbesondere ist das Ringelements vollständig mittels des pulverbasierten additiven Fertigungsverfahrens, insbesondere Laserstrahlschmelzen im Pulverbett, Laserpulverauftragsschweißen oder 3D-Drucken, hergestellt.

Gemäß einer bevorzugten Ausführungsform der Erfindung ist der additiv hergestellte Teil des Ringelements zumindest teilweise an der Außenumfangsfläche und/oder an der Innenumfangsfläche des Ringelements ausgebildet. Beispielsweise ist zumindest eine Schicht an dem Ringelement additiv hergestellt. Bevorzugt sind eine Vielzahl von Schichten an dem Ringelement additiv hergestellt, wobei mit jeder Schicht die Konzentration von Nanopartikel in dem additiv hergestellten Teil zunimmt. Alternativ kann die Konzentration von Nanopartikel mit jeder Schicht abnehmen.

Erfindungsgemäß weist das Ringelement - im Querschnitt parallel zur Rotationsachse der Bandspannrolle gesehen - mindestens zwei umlaufend ausgebildete Kammern auf. Insbesondere weist jede der mindestens zwei Kammern einen dreieckigen oder annähernd dreieckigen Querschnitt auf. Bevorzugt weist das Ringelement - im Querschnitt parallel zur Rotationsachse der Bandspannrolle gesehen - drei umlaufend ausgebildete Kammern auf. Insbesondere weist jede der drei Kammern einen dreieckigen Querschnitt aufweist. Unter einem im Wesentlichen oder annähernd dreieckigen Querschnitt ist zu verstehen, dass die Ecken des jeweiligen Dreiecks nicht nur spitz, sondern auch abgerundet ausgebildet sein können. Vorzugsweise sind zwei der drei dreieckigen Querschnitte identisch ausgebildet, wobei der dritte dreieckige Querschnitt räumlich zwischen den beiden identisch ausgebildeten dreieckigen Querschnitten angeordnet ist. Insbesondere sind die drei Kammern über Ausnehmungen miteinander verbunden. Die Ausnehmungen sind zur Durchführung von Pulver bei der Herstellung des Ringelements eingerichtet.

Bevorzugt sind die Kammern derart am Ringelement ausgebildet, dass das Ringelement im Wesentlichen einen trapezförmigen Querschnitt aufweist. Bevorzugt ist der trapezförmige Querschnitt gleichschenklig ausgebildet. Insbesondere ist eine der beiden Grundseiten des Trapezes zum Riemen hin konvex ausgebildet. Vorzugsweise ist die andere der beiden Grundseiten des Trapezes zum Lager hin eben ausgebildet und umfasst zwei Borde, die sich in axialer Richtung erstrecken und zur Aufnahme des Lagers eingerichtet sind. Das Lager ist beispielsweise als einreihiges oder zweireihiges Kugellager ausgebildet.

Die Erfindung betrifft auch ein Verfahren zur Herstellung einer Bandspannrolle, wobei zunächst das Ringelement mit der Außenumfangsfläche und der Innenumfangsfläche ausgebildet wird, wobei danach zumindest ein Teil des Ringelements durch additive Fertigung am Ringelement ausgebildet wird, und wobei der additiv hergestellte Teil des Ringelements Nanopartikel aufweist, wobei die Nanopartikel inhomogen in dem additiv hergestellten Teil des Ringelements verteilt sind. Mittels Nanopartikel können durch die additive Fertigung eines Teils des Ringelements lokal gezielte Eigenschaften aber auch Geometrien eingestellt werden, ohne dabei die Eigenschaften des Grundwerkstoffs zu verändern. Beispielsweise kann eine Lauffläche an dem Außenumfang des Ringelements derart bearbeitet werden, dass additiv Schichten aufgetragen werden, die aus dem Grundwerkstoff des Ringelements bestehen und Nanopartikel umfassen, um die Verschleißbeständigkeit lokal zu erhöhen und die Duktilität zu erhalten. Dadurch wird nicht nur ein sparsames und kosteneffizientes Verfahren zur Herstellung der Bandspannrolle vorgeschlagen, sondern auch Material insbesondere Legierungselemente eingespart.

Weitere die Erfindung verbessernde Maßnahmen werden nachstehend gemeinsam mit der Beschreibung einer bevorzugten Ausführungsform der Erfindung anhand der beiden Figuren näher erläutert. Dabei zeigt:
- Figur 1: eine schematische Schnittansicht einer nur teilweise dargestellten erfindungsgemäßen Bandspannrolle, und
- Figur 2: eine stark schematische Ansicht zur Veranschaulichung eines Ausschnittes der Bandspannrolle gemäß Figur 1.

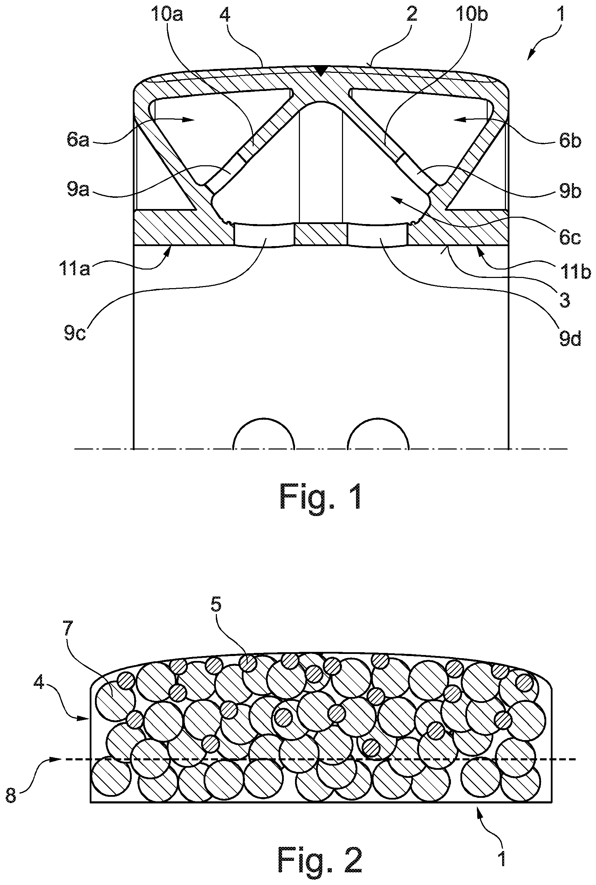

In Figur 1 ist eine erfindungsgemäße Bandspannrolle für einen Zugmitteltrieb teilweise dargestellt. Die Bandspannrolle umfasst ein Ringelement 1 mit einer Außenumfangsfläche 2 und einer Innenumfangsfläche 3. Die Außenumfangsfläche 2 ist zur Aufnahme eines - hier nicht dargestellten - Riemens eingerichtet, wobei die Innenumfangsfläche 3 zur Aufnahme eines - hier nicht dargestellten - Lagers eingerichtet ist. Vorliegend ist ein Teil 4 des Ringelements 1 additiv hergestellt und umfasst Nanopartikel 5, wobei die Nanopartikel 5 nur in Figur 2 stark vereinfacht dargestellt sind.

Ferner zeigt Figur 1, dass das Ringelement 1 drei umlaufend ausgebildete Kammern 6a, 6b, 6c aufweist, wobei jede der drei Kammern 6a, 6b, 6c im Wesentlichen einen dreieckigen Querschnitt aufweist. Vorliegend sind die Ecken der jeweiligen Kammer 6a, 6b, 6c abgerundet ausgebildet. In einem ersten Steg 10a zwischen der ersten Kammer 6a und der dritten Kammer 6c sind mehrere erste Aussparungen 9a über den Umfang verteilt ausgebildet, wobei in einem zweiten Steg 10b zwischen der zweiten Kammer 6b und der dritten Kammer 6c mehrere zweite Aussparungen 9b über den Umfang verteilt ausgebildet sind, und wobei in der Innenumfangsfläche 3 an der dritten Kammer 6c mehrere dritte und vierte Aussparungen 9c, 9d über den Umfang verteilt ausgebildet sind. Die Aussparungen 9a-9d verbinden die drei Kammern 6a, 6b, 6c fluidisch miteinander. Ferner sind die drei Kammern 6a, 6b, 6c derart am Ringelement 1 ausgebildet, dass das Ringelement 1 im Wesentlichen einen trapezförmigen Querschnitt aufweist. Die dritte Kammer 6c ist räumlich zwischen der ersten und zweiten Kammer 6a, 6b ausgebildet. Die Außenumfangsfläche 2 des Ringelements 1 ist konvex ausgebildet, wobei der additiv hergestellte Teil 4 des Ringelements 1 an der Außenumfangsfläche 2 des Ringelements 1 ausgebildet ist, um die Verschleißbeständigkeit an einer Lauffläche für den Riemen zu erhöhen. An der Innenumfangsfläche 3 des Ringelements 1 sind axial zwei Borde 11a, 11b ausgebildet.

Figur 2 zeigt einen stark vereinfacht dargestellten Ausschnitt des Ringelements 1, wobei der additiv hergestellte Teil 4 des Ringelements 1 Nanopartikel 5 aufweist. Der additiv hergestellte Teil 4 des Ringelements 1 ist aus dem gleichen Werkstoff wie das Ringelement 1 ausgebildet, nämlich aus Aluminium, wobei die Aluminiumatome 7 gegenüber den Nanopartikeln 5 vereinfacht als große Kreise dargestellt sind. Die Nanopartikel 5 sind beispielsweise als keramische Teilchen ausgebildet. Vorliegend sind die Nanopartikel 5 inhomogen in dem additiv hergestellten Teil 4 des Ringelements 1 verteilt, wobei der Anteil der Nanopartikel 5 in einem dem Ringelement 1 zugewandten Abschnitt des additiv hergestellten Teils 4 des Ringelements 1 geringer ist als der Anteil der Nanopartikel 5 in einem dem Ringelement 1 abgewandten Abschnitt des additiv hergestellten Teils 4 des Ringelements 1. Der additiv hergestellte Teil 4 des Ringelements 1 wurde mittels Laserstrahlschmelzen hergestellt, wobei vorliegend eine Grenzfläche 8 zwischen dem Ringelement 1 und dem additiv hergestellten Teil 4 des Ringelements 1 durch eine gestrichelte Linie markiert ist.

### Bezugszeichenliste

- 1: Ringelement
- 2: Außenumfangsfläche
- 3: Innenumfangsfläche
- 4: additiv hergestellter Teil des Ringelements
- 5: Nanopartikel
- 6a, 6b, 6c: Kammer
- 7: Aluminiumatom
- 8: Grenzfläche
- 9a-9d: Aussparung
- 10a, 10b: Steg
- 11a, 11b: Bord

## Patentansprüche

1. Bandspannrolle für einen Zugmitteltrieb, umfassend ein Ringelement (1) mit einer Außenumfangsfläche (2), die zur Aufnahme eines Riemens eingerichtet ist, und einer Innenumfangsfläche (3), die zur Aufnahme eines Lagers eingerichtet ist, wobei zumindest ein Teil (4) des Ringelements (1) additiv hergestellt ist, wobei der additiv hergestellte Teil (4) des Ringelements (1) Nanopartikel (5) aufweist, **dadurch gekennzeichnet, dass** die Nanopartikel (5) inhomogen in dem additiv hergestellten Teil (4) des Ringelements (1) verteilt sind und dass das Ringelement (1) mindestens zwei umlaufend ausgebildete Kammern (6a, 6b, 6c) aufweist.

2. Bandspannrolle nach Anspruch 1,
**dadurch gekennzeichnet, dass** der Anteil der Nanopartikel (5) in einem dem Ringelement (1) zugewandten Abschnitt des additiv hergestellten Teils (4) des Ringelements (1) geringer ist als der Anteil der Nanopartikel (5) in einem dem Ringelement (1) abgewandten Abschnitt des additiv hergestellten Teils (4) des Ringelements (1).

3. Bandspannrolle nach einem der vorhergehenden Ansprüche,
**dadurch gekennzeichnet, dass** der additiv hergestellte Teil (4) des Ringelements (1) aus dem gleichen Werkstoff wie das Ringelement (1) ausgebildet ist.

4. Bandspannrolle nach einem der vorhergehenden Ansprüche,
**dadurch gekennzeichnet, dass** die Nanopartikel (5) einen keramischen Anteil, insbesondere einen karbidischen Anteil, aufweisen.

5. Bandspannrolle nach einem der vorhergehenden Ansprüche,
**dadurch gekennzeichnet, dass** der additiv hergestellte Teil (4) des Ringelements (1) zumindest teilweise mittels eines pulverbasierten additiven Fertigungsverfahrens hergestellt ist.

6. Bandspannrolle nach einem der vorhergehenden Ansprüche,
**dadurch gekennzeichnet, dass** der additiv hergestellte Teil (4) des Ringelements (1) zumindest teilweise an der Außenumfangsfläche (2) und/oder an der Innenumfangsfläche (3) des Ringelements (1) ausgebildet ist.

7. Bandspannrolle nach einem der vorhergehenden Ansprüche,
**dadurch gekennzeichnet, dass** jede der mindestens zwei Kammern (6a, 6b, 6c) einen dreieckigen Querschnitt aufweist.

8. Bandspannrolle nach Anspruch 7,
**dadurch gekennzeichnet, dass** die Kammern (6a, 6b, 6c) derart am Ringelement (1) ausgebildet sind, dass das Ringelement (1) im Wesentlichen einen trapezförmigen Querschnitt aufweist.

9. Verfahren zur Herstellung einer Bandspannrolle gemäß einem der vorhergehenden Ansprüche, wobei zunächst ein Ringelement (1) mit einer Außenumfangsfläche (2) und einer Innenumfangsfläche (3) ausgebildet wird, wobei danach zumindest ein Teil (4) des Ringelements (1) durch additive Fertigung am Ringelement (1) ausgebildet wird, wobei der additiv hergestellte Teil (4) des Ringelements (1) Nanopartikel (5) aufweist, und **dadurch gekennzeichnet, dass** die Nanopartikel (5) inhomogen in dem additiv hergestellten Teil (4) des Ringelements (1) verteilt sind und das Ringelement (1) mit mindestens zwei umlaufend ausgebildeten Kammern (6a, 6b, 6c) ausgebildet wird.

## Claims

1. A belt tensioning roller for a traction mechanism, comprising a ring element (1) with an outer circumferential surface (2), which is designed to receive a belt, and an inner circumferential surface (3), which is designed to receive a mounting, wherein at least one part (4) of the ring element (1) is additively manufactured, wherein the additively manufactured part (4) of the ring element (1) comprises nanoparticles (5), **characterised in that** the nanoparticles (5) are distributed inhomogeneously in the additively manufactured part (4) of the ring element (1) and **in that** the ring element (1) has at least two circumferential chambers (6a, 6b, 6c).

2. The belt tensioning roller according to claim 1,
**characterised in that** the proportion of nanoparticles (5) in a section of the additively manufactured part (4) of the ring element (1) facing the ring element (1) is lower than the proportion of nanoparticles (5) in a section of the additively manufactured part (4) of the ring element (1) facing away from the ring element (1).

3. The belt tensioning roller according to any one of the preceding claims,
**characterised in that** the additively manufactured part (4) of the ring element (1) is made of the same material as the ring element (1).

4. The belt tensioning roller according to any one of the preceding claims,
**characterised in that** the nanoparticles (5) have a ceramic portion, in particular a carbide portion.

5. The belt tensioning roller according to any one of the preceding claims,
**characterised in that** the additively manufactured part (4) of the ring element (1) is at least partially manufactured using a powder-based additive manufacturing process.

6. The belt tensioning roller according to any one of the preceding claims,
**characterised in that** the additively manufactured part (4) of the ring element (1) is at least partially formed on the outer circumferential surface (2) and/or on the inner circumferential surface (3) of the ring element (1).

7. The belt tensioning roller according to any one of the preceding claims,
**characterised in that** each of the at least two chambers (6a, 6b, 6c) has a triangular cross section.

8. The belt tensioning roller according to claim 7,
**characterised in that** the chambers (6a, 6b, 6c) are formed on the ring element (1) in such a way that the ring element (1) has a substantially trapezoidal cross section.

9. A method for producing a belt tensioning roller according to any one of the preceding claims, wherein first a ring element (1) with an outer circumferential surface (2) and an inner circumferential surface (3) is formed, wherein at least one part (4) of the ring element (1) is then formed on the ring element (1) by means of additive manufacturing, wherein the additively manufactured part (4) of the ring element (1) comprises nanoparticles (5), and **characterised in that** the nanoparticles (5) are distributed inhomogeneously in the additively manufactured part (4) of the ring element (1) and the ring element (1) is formed with at least two circumferentially formed chambers (6a, 6b, 6c).

## Revendications

1. Rouleau tendeur de courroie pour un mécanisme de traction, comprenant un élément annulaire (1) avec une surface périphérique extérieure (2) conçue pour recevoir une courroie et une surface périphérique intérieure (3) conçue pour recevoir un roulement, au moins une pièce (4) de l'élément annulaire (1) étant fabriquée de manière additive, la pièce (4) fabriquée de manière additive de l'élément annulaire (1) présentant des nanoparticules (5), **caractérisé en ce que** les nanoparticules (5) sont réparties de manière inhomogène dans la pièce (4) fabriquée de manière additive de l'élément annulaire (1) et que l'élément annulaire (1) présente au moins deux chambres circonférentielles (6a, 6b, 6c).

2. Rouleau tendeur de courroie selon la revendication 1,
**caractérisé en ce que** la proportion de nanoparticules (5) dans une section de la pièce (4) fabriquée de manière additive de l'élément annulaire (1) faisant face à l'élément annulaire (1) est inférieure à la proportion de nanoparticules (5) dans une section de la pièce (4) fabriquée de manière additive de l'élément annulaire (1) opposée à l'élément annulaire (1).

3. Rouleau tendeur de courroie selon l'une des revendications précédentes,
**caractérisé en ce que** la pièce (4) fabriquée de manière additive de l'élément annulaire (1) est constituée du même matériau que l'élément annulaire (1).

4. Rouleau tendeur de courroie selon l'une des revendications précédentes,
**caractérisé en ce que** les nanoparticules (5) présentent une portion en céramique, en particulier une portion en carbure.

5. Rouleau tendeur de courroie selon l'une des revendications précédentes,
**caractérisé en ce que** la pièce (4) fabriquée de manière additive de l'élément annulaire (1) est fabriquée au moins partiellement au moyen d'un procédé de fabrication additive à base de poudre.

6. Rouleau tendeur de courroie selon l'une des revendications précédentes,
**caractérisé en ce que** la pièce (4) fabriquée de manière additive de l'élément annulaire (1) est formée au moins partiellement sur la surface périphérique extérieure (2) et/ou sur la surface périphérique intérieure (3) de l'élément annulaire (1).

7. Rouleau tendeur de courroie selon l'une des revendications précédentes,
**caractérisé en ce que** chacune des au moins deux chambres (6a, 6b, 6c) présente une section transversale triangulaire.

8. Rouleau tendeur de courroie selon la revendication 7,
**caractérisé en ce que** les chambres (6a, 6b, 6c) sont formées sur l'élément annulaire (1) de telle sorte que l'élément annulaire (1) présente une section transversale essentiellement trapézoïdale.

9. Procédé de fabrication d'un rouleau tendeur de courroie selon l'une des revendications précédentes, dans lequel un élément annulaire (1) est d'abord formé avec une surface périphérique extérieure (2) et une surface périphérique intérieure (3), après quoi au moins une pièce (4) de l'élément annulaire (1) est formée par fabrication additive sur l'élément annulaire (1), la pièce (4) fabriquée de manière additive de l'élément annulaire (1) présentant des nanoparticules (5), et **caractérisé en ce que** les nanoparticules (5) sont réparties de manière inhomogène dans la pièce (4) fabriquée de manière additive de l'élément annulaire (1) et l'élément annulaire (1) est formé avec au moins deux chambres circonférentielles (6a, 6b, 6c).
